(19) Europäisches Patentamt
European Patent Office
Office européen des brevets

(11) **EP 3 279 690 B1**

(12) **FASCICULE DE BREVET EUROPEEN**

(45) Date de publication et mention
de la délivrance du brevet:
**13.05.2020  Bulletin 2020/20**

(51) Int Cl.:
***G01S 13/931*** *(2020.01)*

(21) Numéro de dépôt: **17181276.1**

(22) Date de dépôt: **13.07.2017**

(54) **PROCÉDÉ DE MESURE DE LA HAUTEUR D'UNE CIBLE PAR RAPPORT AU SOL PAR UN RADAR EN MOUVEMENT, ET RADAR METTANT EN OEUVRE UN TEL PROCÉDÉ**

VERFAHREN ZUM MESSEN DER HÖHE EINES ZIELS ÜBER DEM BODEN MITHILFE EINES RADARS IN BEWEGUNG, UND RADAR ZUR DURCHFÜHRUNG DIESES VERFAHRENS

METHOD FOR MEASURING THE HEIGHT OF A TARGET RELATIVE TO THE GROUND BY A MOVING RADAR, AND RADAR IMPLEMENTING SUCH A METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **02.08.2016  FR 1601191**

(43) Date de publication de la demande:
**07.02.2018   Bulletin 2018/06**

(73) Titulaire: **Thales**
**92400 Courbevoie (FR)**

(72) Inventeurs:
• **CORNIC, Pascal**
**29820 GUILERS (FR)**
• **AUDIC, Yves**
**29280 PLOUZANE (FR)**
• **KEMKEMIAN, Stéphane**
**75014 PARIS (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
DE-A1-102010 007 415    US-A1- 2008 111 733
US-A1- 2011 221 628    US-B1- 6 266 005
US-B1- 6 377 205

**Description**

La présente invention concerne un procédé de mesure de la hauteur d'une cible par rapport au sol par un radar en mouvement, notamment par un radar équipant une automobile. Elle concerne également un radar mettant en œuvre un tel procédé.

L'invention s'applique notamment dans le domaine des radars pour véhicules automobiles, par exemple pour détecter des hauteurs de tabliers de ponts.

Les radars pour automobiles ont été introduits pour des fonctions d'aide à la conduite, plutôt orientées vers le confort, comme par exemple l'adaptation à la vitesse de croisière pour l'utilisation sur autoroute, dite fonction ACC (Adaptative Cruise Control), ou le « Stop and Go » en conduite urbaine. Ils utilisent les ondes millimétriques, en particulier la bande 76-81 GHz.

Grâce à l'évolution des technologies, les applications actuelles visent également des fonctions de sécurité de type anticollision, et il est même envisagé à relativement court terme d'aboutir au véhicule entièrement autonome, la perception de l'environnement étant assurée par l'association d'un certain nombre de capteurs, reposant sur différentes technologies : radar, vidéo, infrarouge notamment.

En raison de ses capacités tout-temps, le radar reste dans ce cadre un capteur prépondérant et ses capacités de détection et de discrimination doivent être étendues pour garantir la fiabilité globale du système. En ce qui concerne l'anticollision, le capteur radar doit en particulier être capable de distinguer parmi les objets fixes qu'il détecte, ceux qui correspondent à des éléments d'infrastructure routière, de ceux qui correspondent à des véhicules immobilisés sur la voie qui constituent potentiellement un risque de collision. Dans ce contexte, il est notamment fondamental qu'il ne génère pas de fausses alarmes pouvant entraîner un freinage ou une manœuvre d'évitement d'urgence, sans cause réelle, en particulier lorsque le véhicule se déplace à grande vitesse. Cela impose une sensibilité et des capacités de discrimination accrues permettant d'appréhender la situation à l'avant du véhicule à grande distance, typiquement supérieure à 200 m, avec en particulier la capacité à estimer la hauteur des objets détectés pour les différencier.

Une configuration particulièrement délicate est celle de la détection des tabliers de pont à l'avant des véhicules, qui ne doivent pas être confondus avec des véhicules arrêtés sur les voies de circulation. Par ailleurs, pour permettre l'intégration sur les véhicules, les dimensions de l'antenne radar doivent être inférieures typiquement à 10 cm en horizontal par 10 cm en vertical. Cette condition limite d'emblée la résolution angulaire à une valeur de l'ordre de 2,5 ° pour un radar fonctionnant à 76 GHz, ce qui est insuffisant pour estimer la hauteur des objets fixes à grande distance.

Un problème technique à résoudre est d'obtenir des capacités de discrimination en élévation suffisantes pour traiter les situations complexes comme la détection des ponts à grande distance, malgré les dimensions réduites de l'antenne.

Actuellement, ce problème n'est pas résolu. Des solutions prévoient de doter les radars de nouvelle génération d'au moins deux voies de réception dans le plan vertical dans le but d'obtenir une capacité de mesure de la hauteur des objets détectés par un traitement de type écartométrie angulaire. Cependant, cette technique ne présente pas une discrimination suffisante pour estimer la hauteur des obstacles à longue distance, en raison des dimensions contraintes de l'antenne. De plus, elle n'est pas très bien adaptée à la mesure de la hauteur d'objets étendus dans le plan vertical et la mesure peut être perturbée par les réflexions sur le sol. Des traitements adaptatifs à haute résolution peuvent être mis en œuvre pour améliorer le pouvoir séparateur naturel de l'antenne mais ces traitements ne sont pas efficaces en présence de réflexions sur le sol, du fait de la cohérence des signaux directs et réfléchis.

Un document DE 10 2010 007415 A1 divulgue un procédé de mesure de la hauteur d'une cible par rapport au sol, par un radar en mouvement.

Un document US 6 377 205 B1 et un document US 2008/111733 A1 divulguent également des méthodes radar pour estimer la hauteur d'un objet par rapport au sol.

Un but de l'invention est notamment de résoudre le problème précité. A cet effet, l'invention a pour objet un procédé de mesure de la hauteur d'une cible par rapport au sol par un radar en mouvement émettant un signal de détection vers ladite cible, ledit radar étant équipé d'un réseau antennaire d'émission et d'un réseau antennaire de réception, la mesure de ladite hauteur $h_2$ étant obtenue par l'estimation de la fréquence d'au moins une modulation d'amplitude fonction du temps produite sur ledit réseau antennaire de réception, ladite modulation étant générée par l'interférence des signaux reçus directement de ladite cible et des signaux reçus après réflexion sur le sol, à partir des signaux émis par ledit réseau antennaire d'émission.

La mesure de ladite hauteur $h_2$ de cible est obtenue, pour une modulation fonction du temps donnée, selon la relation suivante :

$$h_2 = \frac{\lambda d_0{}^2 \hat{f}}{h_1 V}$$

$h_2$ étant ladite hauteur estimée ;

$\hat{f}$ étant la fréquence estimée de ladite modulation d'amplitude fonction du temps ;

$h_1$ étant ladite même hauteur ;

$d_0$ étant la distance dudit radar à la cible ;

$V$ étant la vitesse de rapprochement dudit radar vers la cible ;

$\lambda$ étant la longueur d'onde dudit radar.

Dans un mode de mise en œuvre possible, ledit réseau antennaire de réception étant composé d'un ou plusieurs sous-réseaux de réception et ledit réseau antennaire d'émission étant composé d'un ou plusieurs sous-réseaux d'émission, chaque signal émis par un sous-réseau d'émission générant une modulation d'amplitude fonction du temps sur chaque sous-réseau de réception, une mesure de ladite hauteur $h_2$ de cible est effectuée par l'estimation de la fréquence de la modulation d'amplitude fonction du temps produite sur un sous-réseau de réception par un sous-réseau d'émission situé à la même hauteur.

L'estimation ($\hat{f}$) de la fréquence de modulation est par exemple effectuée à l'aide d'une fonction de corrélation adaptée à deux dimensions, prenant en compte la fréquence et la phase à l'origine de ladite modulation, l'estimation de la fréquence étant égale à la fréquence $f_k$ du couple fréquence-phase ($f_k$, $\varphi_k$) donnant le maximum de corrélation.

Dans un mode de mise en œuvre possible, ledit réseau antennaire de réception étant composé d'un ou plusieurs sous-réseaux de réception et ledit réseau antennaire d'émission étant composé d'un ou plusieurs sous-réseaux d'émission, chaque signal émis par un sous-réseau d'émission générant une modulation d'amplitude fonction du temps sur chaque sous-réseau de réception, une mesure de ladite hauteur $h_2$ de cible est effectuée par l'estimation de fréquence de la modulation d'amplitude fonction du temps produite sur un sous-réseau de réception par un sous-réseau d'émission situé à une hauteur différente, ladite modulation étant le produit d'une modulation correspondant au trajet aller et d'une modulation correspondant au trajet retour de l'onde émise par ledit sous-réseau d'émission, une mesure de ladite hauteur étant l'estimation $\widehat{f_e}$ de la fréquence de modulation due au trajet aller ou de l'estimation $\widehat{f_r}$ de la fréquence de modulation due au trajet retour. Ladite mesure est par exemple prise égale à une combinaison de l'estimation $\widehat{f_e}$ de la fréquence de modulation due au trajet aller et de l'estimation $\widehat{f_r}$ de la fréquence de modulation due au trajet retour, cette combinaison effectue par exemple la moyenne des deux estimations $\widehat{f_e}$ et $\widehat{f_r}$.

L'estimation desdites fréquences de modulation, dues au trajet aller et au trajet retour, est par exemple effectuée à l'aide d'une fonction de corrélation prenant en compte la fréquence de modulation due au trajet aller et la fréquence de modulation due au trajet retour, lesdites fréquences estimées $\widehat{f_e}$ , $\widehat{f_r}$ étant celles donnant le maximum de corrélation.

Ladite estimation de fréquence avec laquelle ladite mesure de hauteur est par exemple obtenue est une combinaison des estimations de fréquences de modulation d'amplitudes fonction du temps obtenues pour différents couples de sous-réseaux d'émission et de réception.

Dans un mode de mise en œuvre possible, ledit réseau antennaire de réception comportant plusieurs sous-réseaux de réception, chaque sous-réseau de réception recevant au moins un signal d'interférence issu d'un signal émis par ledit réseau antennaire d'émission, ledit signal d'interférence étant modulé en amplitude en fonction du temps :

- on capte l'allure d'au moins une modulation d'amplitude spatiale produite sur ledit réseau antennaire de réception à un instant donné ;

- on calcule une estimation $\hat{f}$ de la fréquence de modulation d'amplitude en fonction du temps au moyen d'une fonction de corrélation spatio-temporelle prenant en compte la fréquence de modulation d'amplitude en fonction du temps et la fréquence de ladite au moins modulation d'amplitude spatiale, la fréquence $f_k$ correspondant au maximum de corrélation de ladite corrélation spatio-temporelle étant la fréquence $\hat{f}$ estimée, la mesure de ladite hauteur de cible étant calculée à partir de cette fréquence estimée.

Dans un mode de mise en œuvre possible, ledit réseau antennaire d'émission comportant plusieurs sous-réseaux d'émission, on capte l'allure de la modulation d'amplitude spatiale produite sur ledit réseau antennaire de réception correspondant à chaque signal émis par un sous-réseau d'émission, on calcule pour chaque signal émis une estimation $\hat{f}$ de la fréquence de modulation d'amplitude en fonction du temps au moyen d'une fonction de corrélation spatio-temporelle prenant en compte la fréquence de modulation d'amplitude en fonction du temps et la fréquence de ladite au moins modulation d'amplitude spatiale, la fréquence $f_k$ correspondant au maximum de corrélation de ladite corrélation spatio-temporelle étant la fréquence $\hat{f}$ estimée de la modulation d'amplitude fonction du temps générée par ledit signal émis, une mesure de ladite hauteur (h$_2$) de cible étant calculée à partir d'au moins une fréquence estimée correspondant à un signal émis parmi lesdits sous-réseaux d'émission. La mesure de ladite hauteur h$_2$ de cible est par exemple une combinaison des mesures de hauteur correspondant à chaque signal émis, cette combinaison étant par exemple une moyenne.

L'invention a également pour objet un radar apte à mettre en œuvre un procédé tel que décrit précédemment, un tel radar pouvant avantageusement équiper un véhicule automobile.

D'autres caractéristiques et avantage de l'invention apparaîtront à l'aide de la description qui suit, faite en regard de dessins annexés qui représentent :

- La figure 1, une illustration d'un véhicule équipé d'un radar se dirigeant vers un pont dont la hauteur est à estimer ;
- La figure 2, la modulation d'amplitude théorique du signal reçu en fonction de la distance d du radar à l'obstacle à venir ;
- La figure 3, par une vue de face, une antenne de réception et une antenne d'émission placées à une même hauteur h$_1$ par rapport au sol ;
- La figure 4, l'allure théorique de la fonction de modulation en fonction du temps pour deux hauteurs différentes du sous-réseau de réception du radar ;
- La figure 5, par une vue de face, un exemple d'architecture d'antenne d'un radar selon l'invention avec trois couples des sous-réseaux d'émission et de réception s'étendant dans le sens de la hauteur ;
- La figure 6, par une vue de face, une antenne de réception et une antenne d'émission placées à des hauteurs différentes par rapport au sol ;
- La figure 7, une configuration d'antenne du type de celle de la figure 5 avec des réseaux antennaires d'émission et de réception, mais avec des hauteurs de sous-réseaux différentes en émission et en réception ;
- La figure 8, l'allure de la fonction de modulation spatiale sur le réseau antennaire de réception composé de sous-réseaux de réception espacés régulièrement ;
- La figure 9, l'allure théorique des modulations temporelles observées au cours du temps dans le cas de sous-réseaux de réception espacés régulièrement.

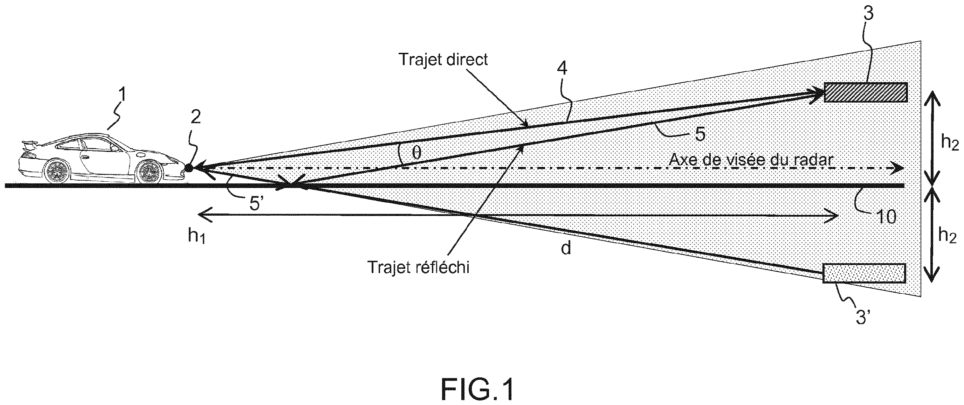

La figure 1 présente un véhicule 1, équipé d'un radar 2, se dirigeant vers un pont dont le tablier 3 est représenté. On considère d'une façon générale un radar automobile 2 monté sur un véhicule dont le faisceau est orienté vers l'avant de celui-ci.

Sur un véhicule de tourisme, ce radar est généralement installé au niveau de la calandre, derrière le logo de la marque, à une hauteur h$_1$ de l'ordre de 40 centimètres par rapport à la chaussée. Un objet fixe, éclairé par le faisceau du radar et situé à une hauteur h$_2$ par rapport à la route, génère par réflexion un signal composite au niveau du radar, résultant du trajet direct 4 et du trajet réfléchi 5, 5' de l'onde électromagnétique sur le sol. Ceci est vrai pour le trajet aller et pour le trajet retour. Il s'ensuit une modulation de l'amplitude du signal reçu sur l'antenne radar en fonction de la distance de la cible d, de la hauteur du radar h$_1$, et de la hauteur de la cible h$_2$. Ce phénomène est bien connu de l'homme de l'art. Il est décrit par exemple par Daricau (chapitre 11 §3.1).

La figure 1 en donne une illustration appliquée au radar automobile, dans le cas d'un objet isolé du sol, comme le tablier de pont 3. L'image 3' du pont est également représentée, cette image symétrique par rapport à la surface 10 de la chaussée renvoie fictivement le rayon réfléchi 5' par la chaussée et reçu par le radar.

Une autre configuration est possible, correspondant à une structure continue verticale posée sur le sol, comme par exemple un véhicule, un panneau de signalisation, ou un pilier de pont. Dans ce cas, c'est la position du barycentre des points brillants ou la position de la surface équivalente radar (SER) moyenne qui détermine la hauteur apparente de l'objet. L'invention s'applique également pour ces configurations, fournissant alors la hauteur apparente de l'objet, et non la hauteur vraie.

Ainsi, pour un émetteur et un récepteur radar situés tous les deux à la hauteur h$_1$, le coefficient de modulation aller-retour peut s'écrire :

$$I^2(\Theta) = (1 + \rho^2 + 2\rho\cos(\tfrac{4\pi h_1 \sin(\Theta)}{\lambda} + \varphi))^2 \qquad (A)$$

où :

- $\theta$ est l'angle d'élévation de la cible par rapport au sol au pied du radar ;

- $\lambda$ est la longueur d'onde ;

- $\rho$ est l'amplitude du coefficient de réflexion ;

- $\varphi$ est la phase du coefficient de réflexion, c'est-à-dire le déphasage induit par la réflexion.

En notant $h_2$ la hauteur apparente et d la distance de l'objet cible, pour les petits angles, on obtient également :

$$\sin(\Theta) = \frac{h_2}{d}$$

Pour les petits angles $\theta$, par exemple $\theta < 5°$, ceux qui sont d'intérêt pour l'invention, $\Theta = \frac{h_2}{d}$.

Dans ce cas, la relation (A) devient :

$$I^2(\Theta) = (1 + \rho^2 + 2\rho\cos(\tfrac{4\pi h_1 h_2}{\lambda d} + \varphi))^2 \quad (A')$$

Pour de tels angles, l'amplitude du coefficient de réflexion $\rho$ sur une chaussée routière est comprise entre 0,7 et 1 et sa phase $\varphi$ est voisine de $\pi$, ce qui conduit à la nouvelle relation suivante :

$$I^2(\Theta) = (1 + \rho^2 - 2\rho\cos(\tfrac{4\pi h_1 h_2}{\lambda d}))^2 \quad (1)$$

Pour le cas particulier où $\rho = 1$, on obtient :

$$I^2(\theta) = 16 sin^4(\tfrac{2\pi h_1 h_2}{\lambda d}) \quad (2)$$

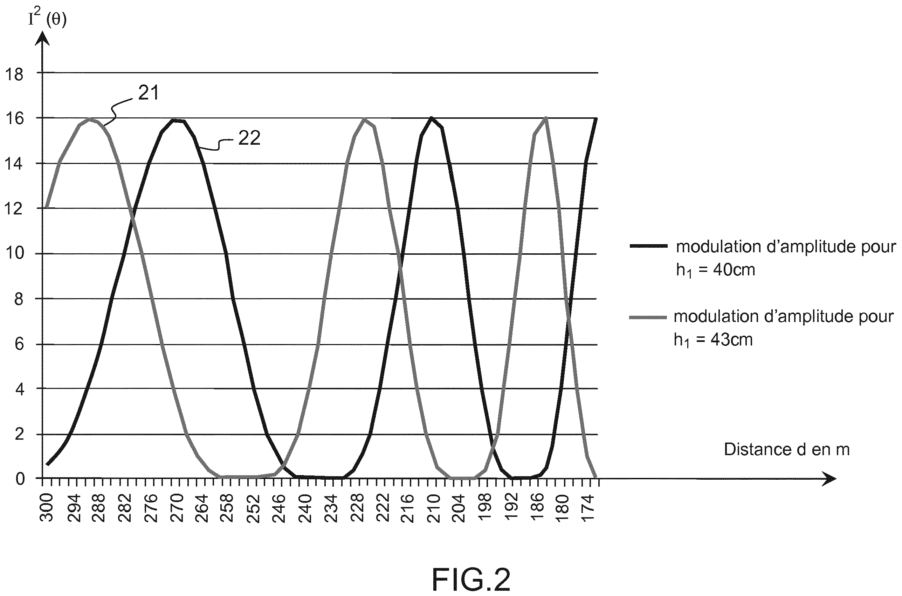

La figure 2 présente, pour $\rho = 1$, la modulation d'amplitude théorique $I^2(\theta)$ du signal reçu en fonction de la distance d du radar à l'obstacle, pour une antenne radar composée d'un premier sous-réseau à la hauteur $h_1$ et d'un deuxième sous-réseau à une hauteur $h_1$ différente, pour une hauteur d'obstacle $h_2$ égale à 4,6 m. L'émission et la réception s'effectuent à la même hauteur. Une première courbe 21 représente la modulation d'amplitude pour la hauteur $h_1 = 40$ cm et une deuxième courbe 22 représente la modulation d'amplitude pour la hauteur $h_1 = 43$ cm.

Dans le cas où le coefficient de réflexion $\rho$ n'est pas égal à 1 mais cependant proche de 1, $1 + \rho^2$ est pratiquement égal à $2\rho$. La relation (1) devient alors :

$$I^2(\theta) = 4\rho^2(1 - \cos(\frac{4\pi h_1 h_2}{\lambda d}))^2$$

et finalement :

$$I^2(\theta) = 16\rho^2 sin^4(\tfrac{2\pi h_1 h_2}{\lambda d}) \quad (3)$$

On retrouve dans ce cas une modulation de forme identique à la précédente, définie par la relation (2), à $\rho^2$ près, c'est-à-dire avec une profondeur plus faible.

Dans le cas où l'antenne (ou le sous-réseau d'antenne) d'émission et l'antenne (ou le sous-réseau d'antenne) de réception sont placées à deux hauteurs différentes, respectivement $h_{1e}$ et $h_{1r}$ (plus précisément $h_{1e}$ et $h_{1r}$, correspondent respectivement à la hauteur du centre de phase à l'émission et du centre de phase à la réception), la modulation d'amplitude est différente à l'émission ($I_e(\theta)$) et à la réception ($Ir(\theta)$), et peut s'écrire pour le trajet aller-retour :

$$I_e(\Theta)Ir(\Theta) = 16\rho^2 sin^2(\tfrac{2\pi h_{1e} h_2}{\lambda d})\, sin^2(\tfrac{2\pi h_{1r} h_2}{\lambda d}) \quad (4)$$

La méthode selon l'invention propose d'estimer la hauteur de la cible $h_2$ à partir de la modulation d'amplitude $I^2(\theta)$ ou $I_e(\theta)Ir(\theta)$ selon le cas, les hauteurs $h_{1e}$, $h_{1r}$ étant connues, la longueur d'onde $\lambda$, étant elle aussi connue. La distance d est par ailleurs mesurée par le radar. Lorsque les hauteurs des centres de phase sont identiques à l'émission et à la réception, on note $h_1 = h_{1e}$, $h_{1r}$.

Selon l'invention l'estimation est effectuée par une mesure dynamique, plus précisément en mesurant une ou plusieurs modulations d'amplitude sur l'antenne au cours du temps, sur une antenne de réception ou plusieurs sous-réseaux d'une antenne de réception, pour une position unique d'antenne d'émission ou pour plusieurs positions de sous-réseaux d'antenne d'émission placés à des hauteurs différentes.

On décrit maintenant un premier mode de mise en œuvre de l'invention, exploitant une mesure dynamique de la fonction de modulation en fonction du temps.

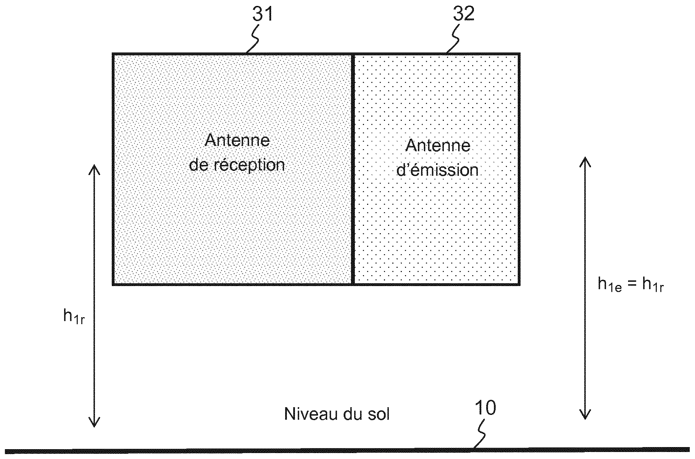

La figure 3 représente, par une vue de face, une antenne de réception 31 et une antenne d'émission 32 placées à une même hauteur h1 par rapport au sol. Dans cette configuration, les antennes d'émission et de réception peuvent comporter plusieurs sous-réseaux pourvu que les centres de phase des couples de sous-réseaux d'émission et de réception soient à la même hauteur par rapport au sol.

A un instant $t$ correspondant à la fin d'un cycle de détection radar de durée $\Delta T$ de rang $i$ tel que $t = i\Delta T$, le signal reçu par le radar depuis une cible située à une distance $d_i$ et à la hauteur $h_2$ est proportionnel à :

$$I^2(\Theta_i) = (1 + \rho^2 - 2\rho\cos(\frac{4\pi h_1 h_2}{\lambda d_i}))^2$$

d'après la relation (1) et pour les faibles valeurs de $\theta_i$.

Le signal reçu est aussi proportionnel à :

$$I^2(\Theta_i) = 16\rho^2 sin^4(\frac{2\pi h_1 h_2}{\lambda d_i})$$

pour les coefficients de réflexion $\rho$ voisins de 1 et où $\Theta_i = \frac{h_2}{d_i}$ , $d_i$ étant la distance de la cible détectée à $t = i\Delta t$.

Par ailleurs, à partir d'une distance initiale de détection $d_0$, la distance de détection à l'instant $t = i\Delta T$ peut s'écrire :

$$d_i = d_0 - V\, i\Delta T,$$

où V est la vitesse de rapprochement du véhicule par rapport à la cible.

Si la distance de détection $d_i$ est grande devant le déplacement réalisé entre deux détections successives, on peut écrire :

$$\frac{1}{d_i} = \frac{1}{d_0 - Vi\Delta T} \approx \frac{1}{d_0}(1 + \frac{Vi\Delta T}{d_0}) \ ,$$

correspondant à, par multiplication par $h_2$ :

$$\Theta_i = \Theta_0(1 + \frac{Vi\Delta T}{d_0})$$

et par suite :

$$I^2(\Theta_i) = (1 + \rho^2 - 2\rho\cos(\frac{4\pi h_1 h_2}{\lambda d_0}(1 + \frac{Vi\Delta T}{d_0})))^2$$

$$I^2(\Theta_i) = 16\rho^2 sin^4(\frac{2\pi h_1 h_2}{\lambda d_0}(1 + \frac{Vi\Delta T}{d_0}))$$

Ou                                                                    dans le cas où ρ est voisin de 1.

Cette dernière relation peut encore s'écrire :

$$I^2(\Theta_i) = 16\rho^2 sin^4(2\pi f i\Delta T + \varphi_0) \quad (5)$$

où f représente la fréquence de modulation des franges d'interférences dans le domaine temporel :

$$f = \frac{h_1 h_2 V}{\lambda d_0^2}$$

et $\varphi_0$ représente la phase à l'origine de la fonction de modulation :

$$\varphi_0 = \frac{2\pi h_1 h_2}{\lambda d_0}$$

qui peut encore s'écrire :

$$\varphi_0 = \frac{2\pi f d_0}{V}$$

La mesure de la fréquence de modulation f donne accès à une estimation de la mesure de hauteur de la cible par la relation : $h_2 = \frac{\lambda d_0^2 f}{h_1 V}$ , la longueur d'onde À, la distance initiale de détection $d_0$, la hauteur $h_1$ étant connues et la vitesse V étant mesurée par ailleurs par le radar.

Pour mesurer la fréquence de modulation, on peut par exemple calculer la racine quatrième de l'amplitude du signal reçu qui est proportionnelle à la fonction de modulation $I^2(\theta_i)$, pour en déduire à l'instant $t = i\Delta T$, une fonction d'amplitude $x_i = K|sin(2\pi f i\Delta T + \varphi_0)|$, d'après la relation (5).

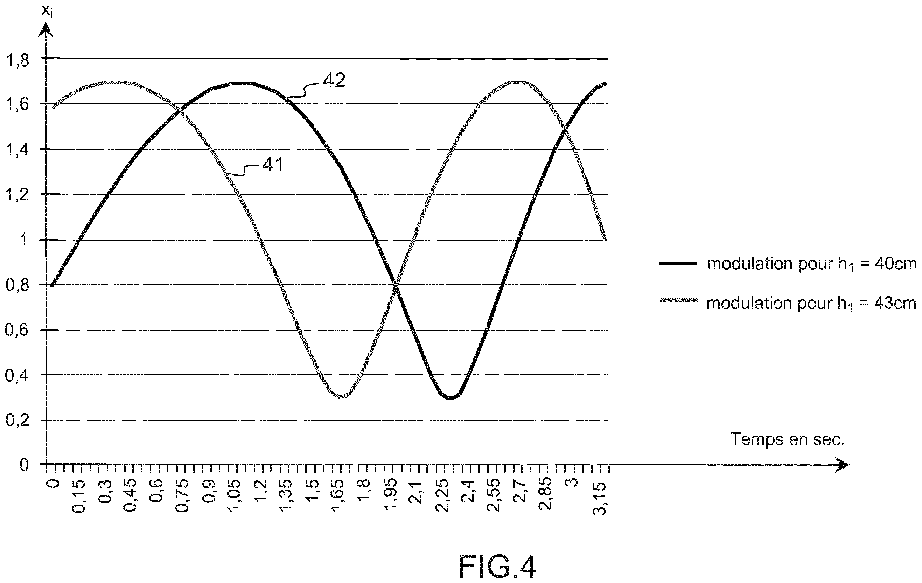

La figure 4 ci-dessous montre l'allure théorique de la fonction de modulation $x_i$ en fonction du temps pour deux hauteurs différentes du sous-réseau de réception, pour une cible positionnée à 4,60 m de hauteur, une distance initiale de détection de 300 mètres, un coefficient de réflexion ρ=0,7 et une vitesse d'approche de 100 km/h.

Chaque sous-réseau reçoit un signal dont l'amplitude varie avec une fréquence f en fonction du temps ($i\Delta T$) et dépendant de la hauteur à calculer et de la distance. Une première courbe 41 représente la modulation temporelle reçue par le sous-réseau à la hauteur $h_1$ et une deuxième courbe 42 représente la modulation temporelle reçue par le sous-réseau à la hauteur $h_2$. L'axe des abscisses représente le temps $t = i\Delta T$, le temps t = 0 correspondant à la distance $d_0$ égale à 300 m.

En répétant l'opération sur un temps total N∆T, c'est-à-dire sur N cycles de détection radar, on obtient une suite de N échantillons qui caractérisent la modulation d'amplitude au cours du temps. Ces N échantillons échantillonnent en fait les courbes de modulation temporelles 41, 42.

En pratique, on obtient la hauteur $h_2$ (hauteur à calculer) en mesurant la modulation d'amplitude sur l'antenne au cours du temps, les mesures étant échantillonnées. Une fois la loi de modulation obtenue par échantillonnage, il faut extraire la fréquence f qui donne la hauteur $h_2$. Pour cela, plusieurs solutions sont possibles.

Pour estimer cette fréquence f, on peut par exemple utiliser une fonction de corrélation en utilisant la méthode décrite dans la demande de brevet FR 2 913 774, notamment en regard des relations (8) à (11). En discrétisant par exemple l'espace des fréquences en M valeurs possibles entre 0 et $F_{max}$ telles que pour k variant de 0 à M - 1, $k = \frac{Fmax}{M}$.

La fonction $x_i$ peut être échantillonnée en posant :

$$s_{i,k} = \left|sin(2\pi\frac{ikFmax\Delta T}{M} + 2\pi\frac{kFmaxd_0}{MV})\right|$$

ou encore :

$$s_{i,k} = \left| sin(2\pi i f_k \Delta T + 2\pi \frac{f_k d_0}{V}) \right|$$

On calcule alors la fonction de corrélation suivante :

$$Correl_k = \frac{\sum_{i=0}^{N-1} x_i * s_{i,k}}{\sqrt{\sum_{i=0}^{N-1} x_i^2} \sqrt{\sum_{k=0}^{N-1} s_{i,k}^2}}$$

La valeur de *k,* pour laquelle la fonction *Correl*$_k$ présente un maximum, donne une estimation de la fréquence de modulation $\hat{f} = f_k = \frac{kFmax}{M}$ dont on déduit :

$$h_2 = \frac{\lambda d_0{}^2 \hat{f}}{h_1 V}$$

Le nombre de points N est choisi le plus grand possible, dans la limite de la validité de l'hypothèse où le déplacement total $NV\Delta T$ est très inférieur à la distance initiale de détection $d_0$. Une seule des deux courbes 41, 42 peut suffire pour extraire la fréquence. Le signal d'interférence généré à partir du signal émis à la hauteur $h_1$ = 40 cm produit une modulation 41 dont la fréquence estimée permet d'obtenir la hauteur $h_2$, elle-même estimée. De même, le signal d'interférence généré à partir du signal émis à la hauteur $h_1$ = 43 cm produit une modulation 42 donnant une deuxième estimation de fréquence. Cependant, on peut avantageusement combiner les deux estimations pour améliorer la mesure, par la moyenne des deux fréquences estimées ou par toute autre combinaison.

Dans une variante de réalisation, une autre fonction de corrélation peut être utilisée pour rendre l'estimation plus robuste. En particulier, on peut noter que le corrélateur *Correl*$_k$ relie de façon explicite la phase à l'origine $\varphi_k = 2\pi \frac{kFmaxd_0}{MV}$ à la fréquence $f_k$ par la relation $\varphi_k = 2\pi \frac{f_k d_0}{V}$.

Or, le résultat de la corrélation dépend fortement de cette phase $\varphi_k$ qui est elle-même sensible à une erreur d'estimation de la hauteur $h_1$, de distance initiale $d_0$ et de la vitesse V.

Par exemple, pour $h_1$=40 cm, $h_2$=4,60 m, V=27 m/sec, $\lambda$=3,9 mm et $d_0$=300 m, on a $f$=0,14 Hz et $\varphi_0$= 1,57 x 2 x $\pi$.

Une augmentation de 3 cm de $h_1$, donnant $h_1$=43 cm, soit une variation de moins de 10%, se traduit par une nouvelle valeur de phase $\varphi_0$=1,68 x 2 x $\pi$, correspondant à une différence de 40° par rapport à la valeur initiale, alors que la fréquence $f$ n'est modifiée que de 0,01 Hz de 0,14 Hz à 0,15 Hz, ce qui est très faible. Cet effet est visible sur la figure 4 qui montre le déphase à l'origine entre les deux courbes correspondant à ces deux hauteurs.

Pour éviter une trop forte sensibilité du corrélateur par rapport à la phase d'origine, il est préférable de choisir une fonction $s_{i,k,k'}$, telle que :

$$s_{i,k,k'} = \left| sin(2\pi \frac{ikFmax\Delta T}{M} + \varphi_{k'}) \right|$$

en discrétisant l'espace des fréquences en M valeurs possibles entre 0 et $F_{max}$ telles que pour k variant de 0 à M-1, $f_k = k \frac{Fmax}{M}$, et en discrétisant l'espace des phases en M' valeurs possibles entre 0 et $2\pi/M'$ telles que pour k variant de 0 à M-1, $\varphi_{k'} = k' \frac{2\pi}{M'}$, on calcule alors la fonction de corrélation à deux dimensions:

$$Correl_{k,k'} = \frac{\sum_{i=0}^{N-1} x_i * s_{i,k,k'}}{\sqrt{\sum_{i=0}^{N-1} x_i^2}\sqrt{\sum_{k=0}^{N-1} s_{i,k,k'}^2}}$$

Les valeurs de k et k' pour lesquelles la fonction $Correl_{k,k'}$ présente un maximum donnent une estimation de la fréquence de modulation :

$$\hat{f} = f_k = \frac{kFmax}{M}$$

$$h_2 = \frac{\lambda d_0^2 \hat{f}}{h_1 V}$$

dont on déduit

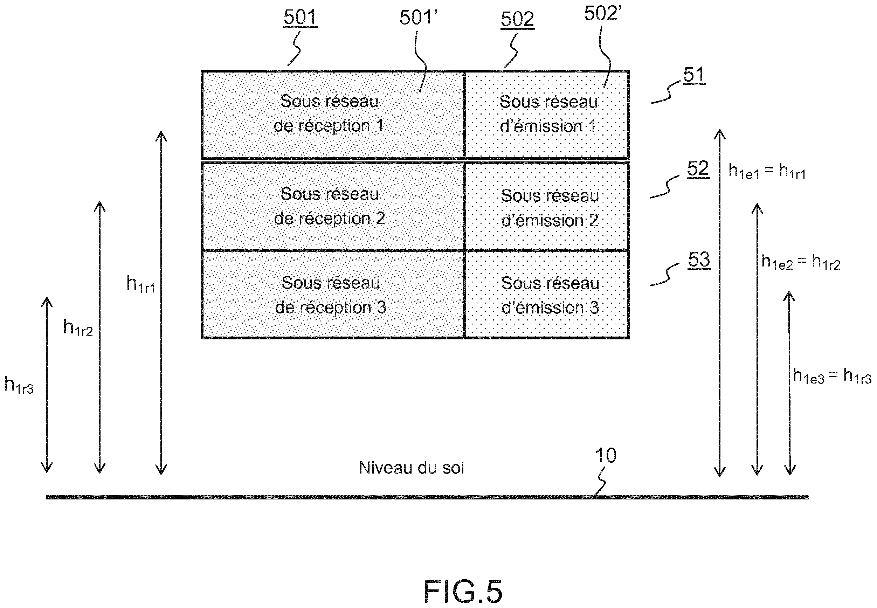

La mesure peut être réitérée au fur et à mesure du rapprochement vers la cible, de façon à améliorer la qualité de l'estimation. La mesure peut également être effectuée sur deux ou plusieurs couples d'émetteurs/récepteurs dont les sous-réseaux antennaires sont situés à la même hauteur par rapport au sol conformément par exemple à la figure 5.

La figure 5 représente une architecture d'antenne correspondant à un réseau MIMO (Mulitple Input, Multiple Output). Plus précisément, elle présente l'antenne radar vue de face avec trois couples des sous-réseaux d'émissions et de réception 51, 52, 53 s'étendant dans le sens de la hauteur, un sous-réseau d'émission et un sous-réseau de réception d'un même couple étant à la même hauteur. L'architecture d'antenne de la figure 5 peut également être vue comme comportant un réseau antennaire de réception 501 et un réseau antennaire d'émission 502. Cette architecture élargi l'exemple de la figure 3 où les réseaux antennaires sont réduits à un seul sous-réseau, formé de l'antenne de réception ou de l'antenne d'émission.

Dans cette configuration, chaque couple d'émetteur/récepteur de même hauteur 51, 52, 53 donne une estimation de la mesure de hauteur $h_2$, et ces estimations obtenues de façon indépendante peuvent être moyennées pour affiner la mesure, une autre combinaison que la moyenne étant possible.

Les émissions sur les différents sous-réseaux antennaires peuvent être réalisés séquentiellement ou simultanément à condition d'émettre des signaux orthogonaux sur les différents sous-réseaux.

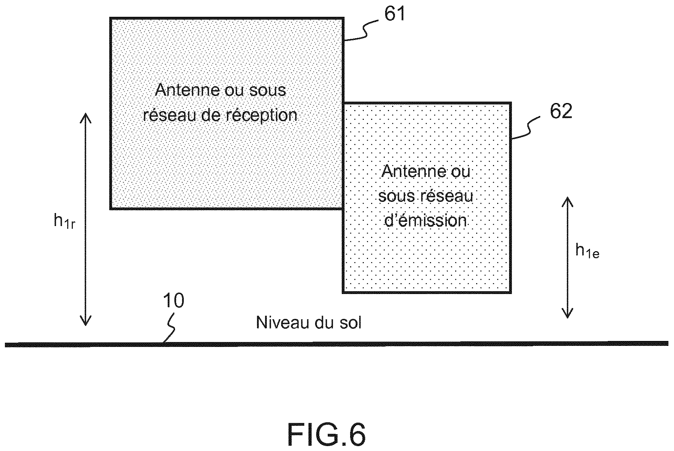

La figure 6 présente une configuration d'antenne où l'antenne ou le sous-réseau de réception 61 est à une hauteur $h_{1r}$ différente de la hauteur $h_{1e}$ de l'antenne ou du sous-réseau d'émission 62. Dans ce cas, il est également possible d'obtenir une estimation de la hauteur de la cible. Les modulations d'amplitudes correspondant au trajet aller et au trajet retour de l'onde électromagnétique sont différentes. La modulation composite est obtenue par la relation (4), l'indice e et l'indice r indiquant pour toute la suite respectivement le lien avec l'émission et avec la réception :

$$I_e(\Theta)I_r(\Theta) = 16\rho^2 sin^2(\frac{2\pi h_{1e} h_2}{\lambda d}) sin^2(\frac{2\pi h_{1r} h_2}{\lambda d})$$

En prenant la racine carrée de l'amplitude du signal reçu, on obtient la fonction de modulation temporelle $x_i$ :

$$x_i = K|sin(2\pi f_e i\Delta T + \varphi_{e0})||sin(2\pi f_r i\Delta T + \varphi_{r0})|$$

Avec les mêmes notations que précédemment :

$$f_e = \frac{h_{1e} h_2 V}{\lambda d_0^2}$$

$$f_r = \frac{h_{1r} h_2 V}{\lambda d_0^2}$$

$$\varphi_{0e} = \frac{2\pi h_{1e} h_2}{\lambda d_0} = \frac{2\pi f_e d_0}{V}$$

$$\varphi_{0r} = \frac{2\pi h_{1r} h_2}{\lambda d_0} = \frac{2\pi f_r d_0}{V}$$

Les mesures échantillonnées de la modulation temporelle sont toujours effectuées au niveau de la réception 61.

On peut utiliser une fonction de corrélation pour estimer les fréquences de modulation à l'émission $f_e$ et à la réception $f_r$, en posant par exemple :

$$s_{i,k,k'} = \left| sin(2\pi \frac{ikFmax}{M} + \varphi_{k'}) \right|$$

pour k variant de 0 à M-1 et k' variant de 0 à M'-1 ;
et :

$$s_{i,l,l'} = \left| sin(2\pi \frac{ilFmax}{M} + \varphi_{l'}) \right|$$

pour l variant de 0 à M-1 et l' variant de 0 à M'-1.

On calcule la fonction de corrélation :

$$Correl_{k,k',l,l'} = \frac{\sum_{i=0}^{N-1} x_i * s_{i,k,k'} * s_{i,l,l'}}{\sqrt{\sum_{i=0}^{N-1} x_i^2} \sqrt{\sum_{k=0}^{N-1} s_{i,k,k'}'^2} \sqrt{\sum_{l=0}^{N-1} s_{i,l,l'}'^2}}$$

Les valeurs de $k,k',l,\ l'$, pour lesquelles la fonction $Correl_{k,k',l,l'}$ présente un maximum, donnent une estimation des fréquences de modulation :

$$\widehat{f_e} = \frac{kFmax}{M} \text{ et } \widehat{f_r} = \frac{lFmax}{M'}$$

qui correspondent à deux estimations de la hauteur $h_2$, dont on peut faire la moyenne.

Les principes d'estimation décrits plus haut peuvent être généralisés à toutes les combinaisons possibles de couples de sous réseaux d'émission et de réception d'une même antenne

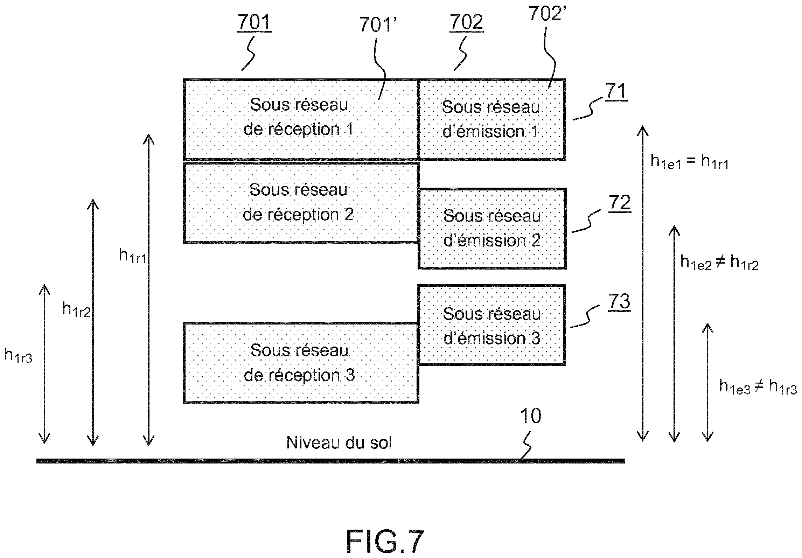

La figure 7 représente une configuration d'antenne du type de celle de la figure 5 avec des réseaux antennaires d'émission 702 et de réception 701, mais avec des hauteurs de sous-réseaux différentes en émission et en réception. Plus précisément, les sous-réseaux d'émission et les sous-réseaux de réception ne sont pas tous disposés à la même hauteur. En particulier, les sous-réseaux des couples 72, 73 n'ont pas la même hauteur en émission et en réception.

Comme dans l'exemple de la figure 5, la configuration de la figure 7 permet d'obtenir neuf combinaisons de couples, donnant neuf estimations différentes de $h_2$, dont on peut faire la moyenne pour affiner encore plus précisément la mesure. Ces estimations différentes sont utiles pour fiabiliser les mesures, notamment lorsque la chaussée n'est pas plate, les imperfections de la chaussée pouvant alors introduire des biais dans les calculs.

Après avoir décrit une mesure dynamique de la fonction de modulation en fonction du temps (mesure de modulation temporelle), on décrit maintenant une mesure de la modulation d'amplitude instantanée sur l'antenne (mesure de modulation spatiale), mesure qui peut être avantageusement combinée à la mesure dynamique.

Cette mesure statique nécessite plusieurs positions de sous-réseaux de réception et d'émission d'une même antenne disposés le long d'un axe vertical.

On peut utiliser Q sous-réseaux d'antennes de réception dont les centres de phases sont espacés sur l'axe vertical, et au moins un sous-réseau d'émission, selon la configuration des figures 5 ou 7 par exemple. Les sous-réseaux placés à des hauteurs différentes peuvent également être décalés sur l'axe horizontal, comme par exemple sur la figure 7.

D'une façon générale, la modulation d'amplitude pour le sous-réseau d'émission placé à la hauteur $h_{1ep}$ et le sous-réseau de réception placé à la hauteur $h_{1rq}$, à la distance d de la cible, s'écrit :

$$I_{ep}(\Theta)I_{rq}(\Theta) = 16\rho^2 sin^2(\frac{2\pi h_{1ep}h_2}{\lambda d}) \, sin^2(\frac{2\pi h_{1rq}h_2}{\lambda d})$$

A un instant donné et pour une hauteur donnée $h_{iep}$ du sous-réseau d'antenne d'émission d'indice p, l'amplitude du signal reçu sur le sous-réseau d'antenne d'indice q positionné à la hauteur de hauteur $h_{1rq}$ est proportionnelle à :

$$sin^2(\frac{2\pi h_{1rq}h_2}{\lambda d})$$

On peut par exemple calculer la racine carrée de l'amplitude du signal reçu pour en déduire un signal :

$$y_{p,q} = K_p \left| sin(\frac{2\pi h_{1rq}h_2}{\lambda d}) \right|$$

où $K_p$ est une constante fonction de la hauteur du sous-réseau d'émission de rang p.

En répétant l'opération sur les Q positions en hauteur des sous-réseaux de réception, on obtient une suite de Q valeurs de $y_{p,q}$ à partir de laquelle il est possible d'estimer $h_2$, conformément aux principes décrits notamment dans les demandes de brevets FR 2 913 774 et FR 2 901 613.

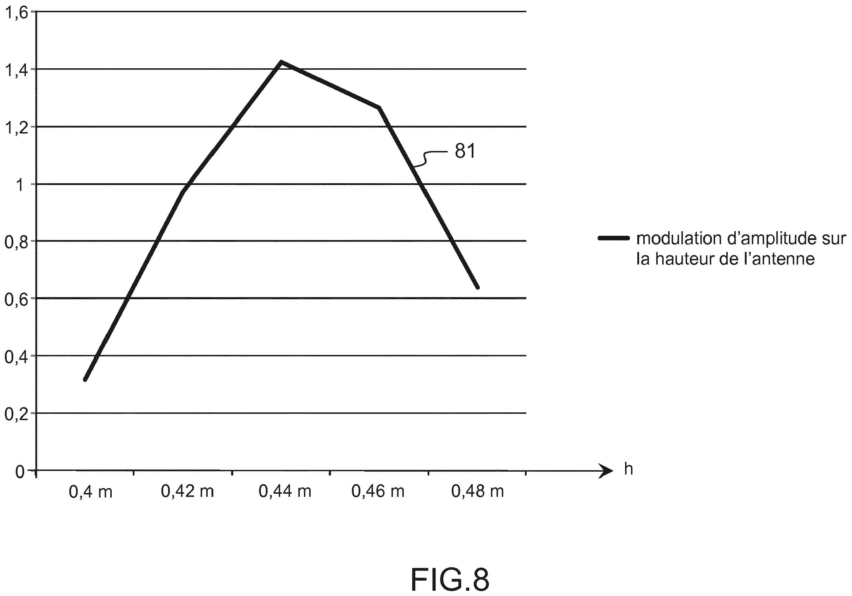

La figure 8 représente par une courbe 81 l'allure de la fonction de modulation correspondante sur une antenne composée de cinq sous-réseaux de réception écartés entre eux de 2 cm, le plus bas étant à 40 cm au-dessus du sol, pour une cible positionnée à 4,60 m, à une distance de 300 m. La courbe 81 représente la modulation le long de l'antenne en fonction de la hauteur à partir de la hauteur la plus basse, 40 cm. La modulation 81 décrit une fraction de valeur absolue de sinusoïde. A partir de cette fraction de sinusoïde, on sait mesurer la fréquence de la modulation comme cela est décrit par la suite.

En notant la différence de hauteur entre le sous-réseau de réception de rang q et le sous-réseau de réception le plus bas : $\Delta h_{1rq} = h_{1rq} - h_{1r0}$, on obtient une fonction de modulation :

$$y_{p,q} = K_p \left| sin(\frac{2\pi \Delta h_{1rq}h_2}{\lambda d} + \frac{2\pi h_{1r0}h_2}{\lambda d}) \right|$$

En choisissant de préférence un espacement régulier entre les sous-réseaux de réception, la hauteur des sous-réseaux évolue selon la suite arithmétique suivante :

$$h_{1rq} = h_{1r0} + q\Delta h_1$$

et :

$$y_{p,q} = K_p \left| sin(\frac{2\pi h_2 q\Delta h_1}{\lambda d} + \frac{2\pi h_{1r0}h_2}{\lambda d}) \right|$$

Cette relation peut être écrite comme suit :

$$y_{p,q} = K_p |sin(2\pi f_s q\Delta h_1 + \varphi_{s0})|$$

avec :

$$f_s = \frac{h_2}{\lambda d}$$

et

$$\varphi_{s0} = \frac{2\pi h_{1r0} h_2}{\lambda d} = 2\pi h_{1r0} f_s$$

On discrétise l'espace des fréquences en R valeurs possibles entre 0 et $F_{smax}$ telles que pour r variant de 0 à R-1 :

$$f_s = r\frac{Fsmax}{R},$$

et on discrétise l'espace des phases en R" valeurs possibles pour r' variant de 0 à R'-1, telles que :

$$\psi_{r'} = r'\frac{2\pi}{R'}$$

puis on pose :

$$u_{p,q,r,r'} = \left| sin(2\pi\frac{qrF_{smax}\Delta h_1}{R} + \psi_{r'}) \right|$$

On calcule alors la fonction de corrélation :

$$Correl_{p,q,r,r'} = \frac{\sum_{q=0}^{Q-1} y_{p,q} * u_{p,q,r,r'}}{\sqrt{\sum_{q=0}^{Q-1} y_{p,q}^2}\sqrt{\sum_{q=0}^{Q-1} u_{p,q,r,r'}^2}}$$

Les valeurs de *r* et de *r'*, pour lesquelles la fonction $Correl_{p,q,r,r'}$ présente un maximum, donnent une estimation de la fréquence de modulation :

$$\widehat{f_s} = r\frac{F_{smax}}{R}$$

d'où l'on déduit la hauteur $h_2$ recherchée :

$$h_2 = \widehat{f_s}\lambda d$$

De façon symétrique, il est également possible d'utiliser plusieurs sous-réseaux d'émission placés à des hauteurs différentes, ces sous-réseaux émettant des ondes orthogonales, pour observer la modulation résultante sur un sous-réseau de réception donné, et en déduire la hauteur de la cible.
Enfin, il est possible de combiner plusieurs sous-réseaux d'émission et plusieurs sous-réseaux de réception pour affiner l'estimation.
En synthèse, on peut mesurer la modulation d'amplitude instantanée (spatiale) sur l'antenne à un instant donné :

- sur plusieurs sous-réseaux d'antenne de réception placés à des hauteurs différentes, pour une antenne d'émission unique ;

- ou sur une antenne de réception unique, pour plusieurs positions de sous-réseaux d'antenne d'émission placés à des hauteurs différentes ;

- ou sur plusieurs sous-réseaux d'antennes de réception placés à des hauteurs différentes, pour plusieurs positions de sous-réseaux d'antennes d'émission placés à des hauteurs différentes.

Dans un mode de mise en œuvre avantageux de l'invention, on peut combiner l'exploitation de la mesure de modulation spatiale à l'exploitation de la mesure temporelle. On peut ainsi renforcer la qualité de l'estimation de la hauteur. Cette combinaison peut être réalisée en utilisant par exemple une fonction d'auto-corrélation spatio-temporelle utilisant à la fois la diversité d'échantillonnage spatial sur les sous-réseaux antennaires et la diversité d'échantillonnage temporel. On décrit un exemple ci-après.

Pour des raisons de simplicité d'écriture, on se limite comme précédemment au cas où l'émission est réalisée à partir d'un sous-réseau positionné à la hauteur $h_{1ep}$, et on considère Q sous-réseaux d'antennes de réception dont les centres de phases sont espacés régulièrement sur l'axe vertical d'un intervalle $\Delta h_1$, tel que le sous-réseau de réception de rang q est positionné à la hauteur $h_{1rq} = h_{1r0} + q\Delta h_1$.

A l'instant $t = i\Delta T$, l'amplitude du signal de modulation sur le sous-réseau de rang q peut s'écrire :

$$y_{p,i,q} = K_p \left| sin(\frac{2\pi h_2(h_{1r0} + q\Delta h_1)}{\lambda d_i} \right|$$

avec :

$$\frac{1}{d_i} = \frac{1}{d_0 - Vi\Delta T} \approx \frac{1}{d_0}(1 + \frac{Vi\Delta T}{d_0})$$

On écrit :

$$y_{p,i,q} = K_p \left| sin(\frac{2\pi h_2(h_{1r0} + q\Delta h_1)}{\lambda d_0})(1 + \frac{Vi\Delta T}{d_0}) \right|$$

En posant comme précédemment :

$$f = \frac{h_{1r0}h_2 V}{\lambda d_0^2} \ \text{et} \ \varphi_0 = \frac{2\pi f d_0}{V} = \frac{2\pi h_{1r0}h_2}{\lambda d_0}$$

le signal de modulation spatio-temporel peut s'écrire:

$$y_{p,i,q} = K_p \left| sin(2\pi f \left(1 + \frac{q\Delta h_1}{h_{1r0}}\right) i\Delta T + \varphi_0(1 + \frac{q\Delta h_1}{h_{1r0}})) \right|$$

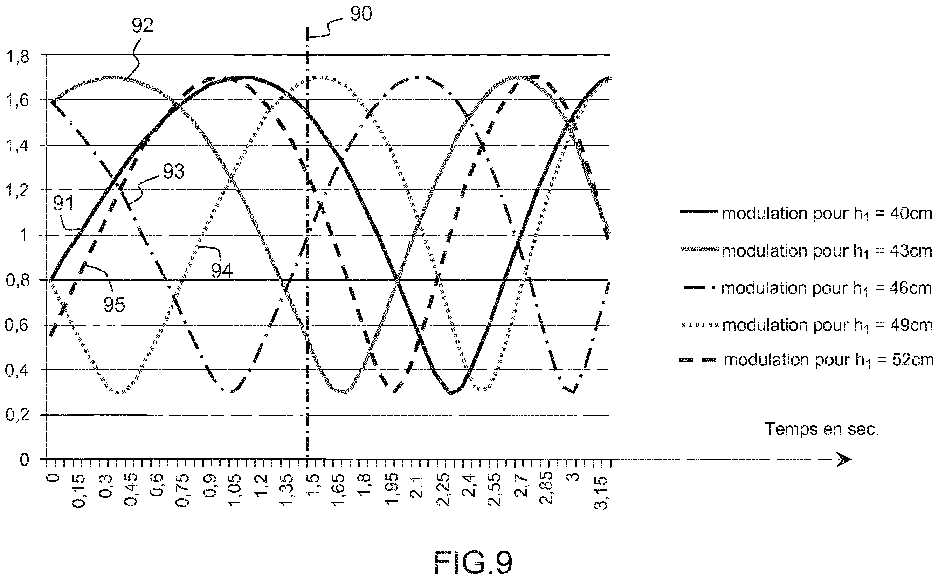

La figure 9 présente l'allure théorique des modulations temporelles observées au cours du temps dans le cas de cinq sous-réseaux de réception espacés régulièrement de 3 cm dans le plan vertical, pour une distance initiale de 300 m, une vitesse de rapprochement de 100 km/h, un coefficient de réflexion de 0,7 et une hauteur de cible de 4,6 m.

Cinq courbes 91, 92, 93, 94, 95 représentent les modulations temporelles, en fonction du temps, sur les sous-réseaux de hauteurs respectives 40 cm, 43 cm, 46 cm, 49 cm et 52 cm. Une modulation spatiale à un instant donné est obtenue en échantillonnant les valeurs d'amplitude à cet instant. Cette modulation spatiale est illustré en figure 9 par l'intersection de la droite 90 avec les courbes, les intersections correspondant aux valeurs échantillonnées. Plus généralement, toute coupe verticale permet d'obtenir une modulation spatiale à l'instant correspondant. La figure 9 illustre ainsi la variété des échantillonnages que permet cette solution.

Pour extraire la fréquence de modulation, donnant accès à la hauteur $h_2$, on peut utiliser une fonction de corrélation à deux dimensions, une dimension temporelle et une dimension spatiale.

A cette fin, on discrétise l'espace des fréquences temporelles en M valeurs possibles entre 0 et $F_{max}$ telles que :

pour k variant de 0 à M-1, $f_k = k\dfrac{Fmax}{M}$ et on discrétise l'espace des phases spatiales en M' valeurs possibles entre 0 et 2π/M' telles que :

pour k variant de 0 à M-1, $\varphi_{k'} = k'\dfrac{2\pi}{M'}$ on note :

$$w_{i,q,k,k'} = \left| sin\left(2\pi\frac{ikFmax\left(1+\frac{q\Delta h_1}{h_{1r0}}\right)\Delta T}{M} + \varphi_{k'}\left(1+\frac{q\Delta h_1}{h_{1r0}}\right)\right)\right|$$

Et on calcule alors la fonction de corrélation à deux dimensions :

$$Correl_{k,k'} = \frac{\sum_{q=0}^{Q-1}\sum_{i=0}^{N-1} y_{p,i,q} * w_{i,q,k,k'}}{\sqrt{\sum_{q=0}^{Q-1}\sum_{i=0}^{N-1} y_{p,i,q}^2}\sqrt{\sum_{q=0}^{Q-1}\sum_{k=0}^{N-1} w_{i,q,k,k'}^2}}$$

Les valeurs de k et k', pour lesquelles la fonction $Correl_{k,k'}$ présente un maximum, donnent une estimation de la fréquence de modulation :

$$\hat{f} = f_k = \frac{kFmax}{M}$$

dont on déduit $h_2 = \frac{\lambda d_0{}^2 \hat{f}}{h_1 V}$.

Il est également possible d'estimer la hauteur $h_2$ à partir des estimations dynamiques (modulation temporelle) et statiques (modulation spatiale) décrites précédemment, et d'effectuer une moyenne pondérée ou non des deux estimations obtenues.

L'invention permet avantageusement d'obtenir une discrimination suffisante sans augmenter les dimensions de l'antenne radar. Elle permet en particulier, à grande distance, de faire une claire distinction entre un tablier de pont et un ou plusieurs véhicules immobilisés sur la chaussée. Elle est applicable aux objets ponctuels ou étendus selon l'axe vertical. Elle n'augmente pas le volume de l'électronique ni la complexité du radar et son application est simple à mettre en œuvre.

L'estimation de la hauteur peut être avantageusement combinée avec d'autres paramètres discriminant comme la surface équivalente estimée, la distance, l'extension distance, la position latérale estimée et leurs fluctuations pour en déduire une signature permettant de caractériser la nature de l'objet détecté.

L'invention s'applique pour mesurer la hauteur vraie d'objets posés sur le sol, comme un tablier de pont par exemple. Comme cela a été indiqué précédemment, elle s'applique également pour des mesures de hauteurs d'objets continus posés sur le sol. Dans ce cas, la hauteur $h_2$ de cible correspond à la hauteur apparente du point brillant moyen.

L'invention a été décrite pour mesurer la hauteur d'une cible fixe, par exemple un pont. Elle peut cependant s'appliquer pour des objets mobiles et permettre avantageusement de faire de la classification de véhicules par exemple, par la détection de la hauteur des véhicules. Dans ce cas la vitesse V de rapprochement du radar vers la cible (un autre véhicule par exemple) est finalement la vitesse relative du radar par rapport à cette cible.

## Revendications

1. Procédé de mesure de la hauteur d'une cible par rapport au sol par un radar en mouvement émettant un signal de détection vers ladite cible, ledit radar étant équipé d'un réseau antennaire d'émission (32, 502, 62, 702) et d'un réseau antennaire de réception (31, 501, 61, 701), et en ce que la mesure de ladite hauteur ($h_2$) est obtenue par l'estimation de la fréquence d'au moins une modulation d'amplitude fonction du temps (41, 42, 91, 92, 93, 94, 95) produite sur ledit réseau antennaire de réception, ladite modulation étant générée par l'interférence des signaux reçus directement (4) de ladite cible et des signaux reçus après réflexion (5) sur le sol, à partir des signaux émis par ledit réseau antennaire d'émission, **caractérisé en ce que** la mesure de ladite hauteur (h$_2$) de cible étant obtenue, pour une modulation fonction du temps donnée, selon la relation suivante :

$$h_2 = \frac{\lambda d_0{}^2 \hat{f}}{h_1 V}$$

h$_2$ étant ladite hauteur estimée ;
$\hat{f}$ étant la fréquence estimée de ladite modulation d'amplitude fonction du temps ;
h$_1$ étant la hauteur à laquelle ledit signal de détection est émis ;
d$_0$ étant la distance dudit radar à la cible ;
V étant la vitesse de rapprochement dudit radar vers la cible ;
λ étant la longueur d'onde dudit radar.

2.   Procédé selon la revendication 1, **caractérisé en ce que** ledit réseau antennaire de réception (501) étant composé d'un ou plusieurs sous-réseaux de réception (31, 501', 61, 701') et ledit réseau antennaire d'émission (502) étant composé d'un ou plusieurs sous-réseaux d'émission (32, 502', 62, 702'), chaque signal émis par un sous-réseau d'émission générant une modulation d'amplitude fonction du temps sur chaque sous-réseau de réception, une mesure de ladite hauteur (h$_2$) de cible est effectuée par l'estimation de la fréquence de la modulation d'amplitude fonction du temps produite sur un sous-réseau de réception (31) par un sous-réseau d'émission situé à la même hauteur (32, 51, 52, 53).

3.   Procédé selon la revendication 2, **caractérisé en ce que** l'estimation (/) de la fréquence de modulation est effectuée à l'aide d'une fonction de corrélation adaptée à deux dimensions, prenant en compte la fréquence et la phase à l'origine de ladite modulation, l'estimation de la fréquence étant égale à la fréquence f$_k$ du couple fréquence-phase (f$_k$, φ$_k$) donnant le maximum de corrélation.

4.   Procédé selon l'une quelconque des revendications précédentes, **caractérisé en ce que** ledit réseau antennaire de réception (501) étant composé d'un ou plusieurs sous-réseaux de réception (31, 501', 61, 701') et ledit réseau antennaire d'émission (502) étant composé d'un ou plusieurs sous-réseaux d'émission (32, 502', 62, 702'), chaque signal émis par un sous-réseau d'émission générant une modulation d'amplitude fonction du temps sur chaque sous-réseau de réception, une mesure de ladite hauteur (h$_2$) de cible est effectuée par l'estimation de fréquence de la modulation d'amplitude fonction du temps produite sur un sous-réseau de réception (61) par un sous-réseau d'émission situé à une hauteur différente (62, 71, 72, 73), ladite modulation étant le produit d'une modulation correspondant au trajet aller et d'une modulation correspondant au trajet retour de l'onde émise par ledit sous-réseau d'émission, une mesure de ladite hauteur étant l'estimation $\widehat{f_e}$ de la fréquence de modulation due au trajet aller ou de l'estimation $\widehat{f_r}$ de la fréquence de modulation due au trajet retour.

5.   Procédé selon la revendication 4, **caractérisé en ce que** ladite mesure est prise égale à une combinaison de l'estimation $\widehat{f_e}$ de la fréquence de modulation due au trajet aller et de l'estimation $\widehat{f_r}$ de la fréquence de modulation due au trajet retour.

6.   Procédé selon la revendication 5, **caractérisé en ce que** ladite combinaison effectue la moyenne des deux estimations $\widehat{f_e}$ et $\widehat{f_r}$.

7.   Procédé selon l'une quelconque des revendications 4 à 6, **caractérisé en ce que** l'estimation desdites fréquences de modulation, dues au trajet aller et au trajet retour, est effectuée à l'aide d'une fonction de corrélation prenant en compte la fréquence de modulation due au trajet aller et la fréquence de modulation due au trajet retour, lesdites fréquences estimées $\widehat{f_e}$, $\widehat{f_r}$ étant celles donnant le maximum de corrélation.

8.   Procédé selon l'une quelconque des revendications précédentes, **caractérisé en ce que** ladite estimation de fréquence avec laquelle ladite mesure de hauteur est obtenue est une combinaison des estimations de fréquences de modulation d'amplitudes fonction du temps obtenues pour différents couples de sous-réseaux d'émission et de réception (51, 52, 53, 71, 72, 73).

9. Procédé selon l'une quelconque des revendications précédentes, **caractérisé en ce que** ledit réseau antennaire de réception (501) comportant plusieurs sous-réseaux de réception, chaque sous-réseau de réception recevant au moins un signal d'interférence issu d'un signal émis par ledit réseau antennaire d'émission (502), ledit signal d'interférence étant modulé en amplitude en fonction du temps :

    - on capte l'allure d'au moins une modulation d'amplitude (81) produite le long dudit réseau antennaire de réception à un instant donné (90) en fonction de la hauteur desdits sous-réseaux ;
    - on calcule une estimation $\hat{f}$ de la fréquence de modulation d'amplitude en fonction du temps au moyen d'une fonction de corrélation spatio-temporelle prenant en compte la fréquence de modulation d'amplitude en fonction du temps et la fréquence de ladite au moins modulation d'amplitude spatiale, la fréquence $f_k$ correspondant au maximum de corrélation de ladite corrélation spatio-temporelle étant la fréquence $\hat{f}$ estimée, la mesure de ladite hauteur de cible étant calculée à partir de cette fréquence estimée.

10. Procédé selon la revendication 9, **caractérisé en ce que** ledit réseau antennaire d'émission (502) comportant plusieurs sous-réseaux d'émission, on capte l'allure de la modulation d'amplitude spatiale produite sur ledit réseau antennaire de réception correspondant à chaque signal émis par un sous-réseau d'émission, on calcule pour chaque signal émis une estimation $\hat{f}$ de la fréquence de modulation d'amplitude en fonction du temps au moyen d'une fonction de corrélation spatio-temporelle prenant en compte la fréquence de modulation d'amplitude en fonction du temps et la fréquence de ladite au moins modulation d'amplitude spatiale, la fréquence $f_k$ correspondant au maximum de corrélation de ladite corrélation spatio-temporelle étant la fréquence $\hat{f}$ estimée de la modulation d'amplitude fonction du temps générée par ledit signal émis, une mesure de ladite hauteur ($h_2$) de cible étant calculée à partir d'au moins une fréquence estimée correspondant à un signal émis parmi lesdits sous-réseaux d'émission.

11. Procédé selon la revendication 10, **caractérisé en ce que** la mesure de ladite hauteur ($h_2$) de cible est une combinaison des mesures de hauteur correspondant à chaque signal émis.

12. Procédé selon la revendication 11, **caractérisé en ce que** ladite combinaison est une moyenne.

13. Procédé selon l'une quelconque des revendications précédentes, **caractérisé en ce que** ladite cible est un tablier de pont.

14. Procédé selon l'une quelconque des revendications 1 à 12, **caractérisé en ce que** ladite hauteur ($h_2$) de cible correspond à la hauteur apparente du point brillant moyen d'un objet continu posé sur le sol.

15. Radar, **caractérisé en ce qu'**il est apte à mettre en œuvre le procédé selon l'une quelconque des revendications précédentes.

16. Radar selon la revendication 15, **caractérisé en ce qu'**il est apte à équiper un véhicule automobile.

**Patentansprüche**

1. Verfahren zum Messen der Höhe eines Ziels in Bezug auf den Boden durch einen Radar in Bewegung, welcher ein Detektionssignal in Richtung des Ziels aussendet, wobei der Radar mit einem Sendeantennen-Netzwerk (32, 502, 62, 702) und einem Empfangsantennen-Netzwerk (31, 501, 61, 701) ausgerüstet ist und **dadurch gekennzeichnet, dass** die Messung der Höhe ($h_2$) durch die Schätzung der Frequenz mindestens eine zeitabhängige Amplitudenmodulation (41, 42, 91, 92, 93, 94, 95) erzielt wird, welche auf dem Empfangsantennen-Netzwerk erzeugt wird, wobei die Modulation durch die Interferenz der direkt empfangenen Signale (4) des Ziels und der nach Reflexion (5) am Boden der empfangenen Signale erzeugt wird, anhand von den durch das Sendeantennen-Netzwerk ausgesendeten Signalen,
die Messung der Höhe ($h_2$) des Ziels für eine gegebene zeitabhängige Modulation gemäß folgender Beziehung erzielt wird:

$$h_2 = \frac{\lambda d_0^2 \hat{f}}{h_1 V},$$

wobei

$h_2$ die geschätzte Höhe ist;

$\hat{f}$ die geschätzte Frequenz der zeitabhängigen Amplitudenmodulation ist;

$h_1$ die Höhe ist, in welcher das Detektionssignal ausgesendet wird;

$d_0$ der Abstand des Radars zum Ziel ist;

$V$ die Annäherungsgeschwindigkeit des Radars an das Ziel ist;

$\lambda$ die Wellenlänge des Radars ist.

2. Verfahren nach Anspruch 1, **dadurch gekennzeichnet, dass**, da das Empfangsantennen-Netzwerk (501) aus einem oder mehreren Empfangs-Teilnetzwerken (31, 501', 61, 701') besteht und das Sendeantennen-Netzwerk (502) aus einem oder mehreren Sende-Teilnetzwerken (32, 502', 62, 702') besteht, wobei jedes durch einen Sende-Teilnetzwerk ausgesendetes Signal eine zeitabhängige Amplitudenmodulation in jedem Empfangs-Teilnetzwerk erzeugt, eine Messung der Höhe (h2) des Ziels durch Schätzung der Frequenz der zeitabhängigen Amplitudenmodulation erfolgt, welche auf einem Empfangs-Teilnetzwerk (31) durch ein in der gleichen Höhe befindliches Sende-Teilnetzwerk (32, 51, 52, 53) erzeugt wird.

3. Verfahren nach Anspruch 2, **dadurch gekennzeichnet, dass** die Schätzung $(\hat{f})$ der Modulationsfrequenz mithilfe einer geeigneten zweidimensionalen Korrelationsfunktion erfolgt, welche die Frequenz und die Phase am Ursprung der Modulation berücksichtigt, wobei die Schätzung der Frequenz gleich der Frequenz $f_k$ desjenigen Frequenz-Phasen-Paares ($f_k$, $\varphi_k$) ist, welches das Korrelationsmaximum ergibt.

4. Verfahren nach einem der vorhergehenden Ansprüche, **dadurch gekennzeichnet, dass**, da das Empfangsantennen-Netzwerk (501) aus einem oder mehreren Empfangs-Teilnetzwerken (31, 501', 61, 701') besteht und das Sendeantennen-Netzwerk (502) aus einem oder mehreren Sende-Teilnetzwerken (32, 502', 62, 702') besteht, wobei jedes durch einen Sende-Teilnetzwerk ausgesandtes Signal eine zeitabhängige Amplitudenmodulation auf jedem Empfangs-Teilnetzwerk erzeugt, eine Messung der Höhe ($h_2$) des Ziels durch die Schätzung der Frequenz der zeitabhängigen Amplitudenmodulation erfolgt, welche auf einem Empfangs-Teilnetzwerk (61) durch einen Sende-Teilnetzwerk erzeugt wird, welches sich in einer unterschiedlichen Höhe (62, 71, 72, 73) befindet, wobei die Modulation das Produkt einer Modulation ist, welche dem Hinweg entspricht und einer Modulation, welche dem Rückweg der durch das Sende-Teilnetzwerk ausgesendeten Welle entspricht, wobei eine Messung der Höhe die Schätzung $\widehat{f_e}$ der Modulationsfrequenz aufgrund des Hinwegs oder der Schätzung $\widehat{f_r}$· der Modulationsfrequenz aufgrund des Rückwegs ist.

5. Verfahren nach Anspruch 4, **dadurch gekennzeichnet, dass** die Messung gleich einer Kombination der Schätzung $\widehat{f_e}$ der Modulationsfrequenz aufgrund des Hinwegs und der Schätzung $\widehat{f_r}$ der Modulationsfrequenz aufgrund des Rückwegs vorgenommen wird.

6. Verfahren nach Anspruch 5, **dadurch gekennzeichnet, dass** die Kombination den Mittelwert der beiden Schätzungen $\widehat{f_e}$ und $\widehat{f_r}$ ermittelt.

7. Verfahren nach einem der Ansprüche 4 bis 6, **dadurch gekennzeichnet, dass** die Schätzung der Modulationsfrequenzen aufgrund des Hinwegs und des Rückwegs mithilfe einer Korrelationsfunktion vorgenommen wird, welche die Modulationsfrequenz aufgrund des Hinwegs und die Modulationsfrequenz aufgrund des Rückwegs berücksichtigt, wobei die geschätzten Frequenzen $\widehat{f_e}$, $\widehat{f_r}$ diejenigen sind, welche das Korrelationsmaximum ergeben.

8. Verfahren nach einem der vorhergehenden Ansprüche, **dadurch gekennzeichnet, dass** die Schätzung der Frequenz, mit welcher die Messung der Höhe erzielt wird, eine Kombination der Schätzungen von zeitabhängigen Amplitudenmodulationsfrequenzen ist, welche für unterschiedliche Paare von Sende- und Empfangs-Teilnetzwerken (51, 52, 53, 71, 72, 73) erzielt werden.

9. Verfahren nach einem der vorhergehenden Ansprüche, **dadurch gekennzeichnet, dass**, da das Empfangsantennen-Netzwerk (501) eine Mehrzahl von Empfangs-Teilnetzwerken beinhaltet, wobei jedes Empfangs-Teilnetzwerk mindestens ein Interferenzsignal empfängt, welches einem von dem Sendeantennen-Netzwerk (502) ausgesendeten Signal entstammt, wobei das Interferenzsignal zeitabhängig amplitudenmoduliert wird:

- der Verlauf mindestens einer Amplitudenmodulation (81), welche entlang des Empfangsantennen-Netzwerks zu einem gegebenen Zeitpunkt (90) angesichts der Höhe der Teilnetzwerke erzeugt wird, aufgenommen wird;
- eine Schätzung $\hat{f}$ der zeitabhängigen Amplitudenmodulationsfrequenz mithilfe einer räumlich-zeitlichen Korrelationsfunktion, welche die zeitabhängige Amplitudenmodulationsfrequenz und die Frequenz der mindestens einen räumlichen Amplitudenmodulation berücksichtigt, berechnet wird, wobei die Frequenz $f_k$, welche dem Korrelationsmaximum der räumlich-zeitlichen Korrelation entspricht, die geschätzte Frequenz $\hat{f}$ ist, wobei die Messung der Höhe des Ziels anhand dieser geschätzten Frequenz berechnet wird.

10. Verfahren nach Anspruch 9, **dadurch gekennzeichnet, dass**, da das Sendeantennen-Netzwerk (502) eine Mehrzahl von Sende-Teilnetzwerken beinhaltet, der Verlauf der räumlichen Amplitudenmodulation, welche auf dem Empfangsantennen-Netzwerk erzeugt wird, welche einem jeden durch ein Sende-Teilnetzwerk ausgesendeten Signal entspricht, aufgenommen wird, für jedes ausgesendete Signal eine Schätzung $\hat{f}$ der zeitabhängigen Amplitudenmodulationsfrequenz mithilfe einer räumlich-zeitlichen Korrelationsfunktion, welche die zeitabhängige Amplitudenmodulationsfrequenz und die Frequenz der mindestens einen räumlichen Amplitudenmodulation berücksichtigt, berechnet wird, wobei die Frequenz $f_k$, welche dem Korrelationsmaximum der räumlich-zeitlichen Korrelation entspricht, die geschätzte Frequenz $\hat{f}$ der zeitabhängigen Amplitudenmodulation ist, welche durch das ausgesendete Signal erzeugt wird, wobei eine Messung der Höhe ($h_2$) des Ziels anhand mindestens einer geschätzten Frequenz, welche einem aus den Sende-Teilnetzwerken ausgesendeten Signal entspricht, berechnet wird.

11. Verfahren nach Anspruch 10, **dadurch gekennzeichnet, dass** die Messung der Höhe ($h_2$) des Ziels eine Kombination der Höhenmessungen ist, welche jedem ausgesendeten Signal entsprechen.

12. Verfahren nach Anspruch 11, **dadurch gekennzeichnet, dass** die Kombination ein Mittelwert ist.

13. Verfahren nach einem der vorhergehenden Ansprüche, **dadurch gekennzeichnet, dass** das Ziel eine Brückenfahrbahn ist.

14. Verfahren nach einem der Ansprüche 1 bis 12, **dadurch gekennzeichnet, dass** die Höhe ($h_2$) des Ziels der scheinbaren Höhe des mittleren hellen Punktes eines auf dem Boden liegenden kontinuierlichen Objekts ist.

15. Radar, **dadurch gekennzeichnet, dass** er in der Lage ist, das Verfahren nach einem der vorhergehenden Ansprüche umzusetzen.

16. Radar nach Anspruch 15, **dadurch gekennzeichnet, dass** er in der Lage ist, ein Kraftfahrzeug auszurüsten.

**Claims**

1. Method for measuring the height of a target relative to the ground using a moving radar transmitting a detection signal towards said target, said radar being equipped with a transmission antenna array (32, 502, 62, 702) and with a reception antenna array (31, 501, 61, 701), and **characterized in that** the measurement of said height ($h_2$) is obtained by estimating the frequency of at least one time-dependent amplitude modulation (41, 42, 91, 92, 93, 94, 95) produced on said reception antenna array, said modulation being generated by the interference of the signals received directly (4) from said target and the signals received after reflection (5) on the ground, on the basis of the signals transmitted by said transmission antenna array,

the measurement of said target height ($h_2$) is obtained, for a given time-dependent modulation, by applying the following equation:

$$h_2 = \frac{\lambda d_0{}^2 \hat{f}}{h_1 V}$$

$h_2$ being said estimated height;

$\hat{f}$ being the estimated frequency of said time-dependent amplitude modulation;

$h_1$ being the height at which said detection signal is transmitted;

$d_0$ being the distance from said radar to the target;

$V$ being the closing speed of said radar towards the target;

$\lambda$ being the wavelength of said radar.

2. Method according to claim 1, **characterized in that**, said reception antenna array (501) being formed of one or more reception sub-arrays (31, 501', 61, 701') and said transmission antenna array (502) being formed of one or more transmission sub-arrays (32, 502', 62, 702'), each signal transmitted by a transmission sub-array generating a time-dependent amplitude modulation on each reception sub-array, a measurement of said target height ($h_2$) is carried out by estimating the frequency of the time-dependent amplitude modulation produced on a reception sub-array (31) by a transmission sub-array (32, 51, 52, 53) situated at the same height.

3. Method according to Claim 2, **characterized in that** the estimation ($\hat{f}$) of the modulation frequency is carried out using a suitable two-dimensional correlation function, taking account of the frequency and the phase at the origin of said modulation, the estimation of the frequency being equal to the frequency $f_k$ of the frequency-phase pair ($f_k$, $\varphi_k$) giving the correlation maximum.

4. Method according to any one of the preceding claims, **characterized in that**, said reception antenna array (501) being formed of one or more reception sub-arrays (31, 501', 61, 701') and said transmission antenna array (502) being formed of one or more transmission sub-arrays (32, 502', 62, 702'), each signal transmitted by a transmission sub-array generating a time-dependent amplitude modulation on each reception sub-array, a measurement of said target height (h2) is carried out by estimating the frequency of the time-dependent amplitude modulation produced on a reception sub-array (61) by a transmission sub-array situated at a different height (62, 71, 72, 73), said modulation being the product of a modulation corresponding to the outbound path and a modulation corresponding to the return path of the wave transmitted by said transmission sub-array, a measurement of said height being the estimation $\widehat{f_e}$ of the modulation frequency due to the outbound path or the estimation $\widehat{f_r}$ of the modulation frequency due to the return path.

5. Method according to Claim 4, **characterized in that** said measurement is taken to be equal to a combination of the estimation $\widehat{f_e}$ of the modulation frequency due to the outbound path and of the estimation $\widehat{f_r}$ of the modulation frequency due to the return path.

6. Method according to Claim 5, **characterized in that** said combination averages the two estimations $\widehat{f_e}$ and $\widehat{f_r}$.

7. Method according to any one of Claims 4 to 6, **characterized in that** the estimation of said modulation frequencies, due to the outbound path and to the return path, is carried out using a correlation function taking account of the modulation frequency due to the outbound path and the modulation frequency due to the return path, said estimated frequencies $\widehat{f_e}$, $\widehat{f_r}$ being those giving the correlation maximum.

8. Method according to any one of the preceding Claims, **characterized in that** said frequency estimation, with which said height measurement is obtained, is a combination of the time-dependent amplitude modulation frequency estimations obtained for different pairs of transmission and reception sub-arrays (51, 52, 53, 71, 72, 73).

9. Method according to any one of the preceding Claims, **characterized in that**, said reception antenna array (501) including a plurality of reception sub-arrays, each reception sub-array receiving at least one interference signal originating from a signal transmitted by said transmission antenna array (502), said interference signal being subjected to time-dependent amplitude modulation:

- the profile of at least one amplitude modulation (81), produced along said reception antenna array at a given instant (90) depending on the height of said sub-arrays, is captured;
- an estimation $\hat{f}$ of the time-dependent amplitude modulation frequency is calculated by means of a spatio-temporal correlation function taking account of the time-dependent amplitude modulation frequency and the frequency of said at least one spatial amplitude modulation, the frequency $f_k$, corresponding to the correlation maximum of said spatio-temporal correlation, being the estimated frequency $\hat{f}$, the measurement of said target height being calculated on the basis of this estimated frequency.

10. Method according to Claim 9, **characterized in that**, said transmission antenna array (502) including a plurality of transmission sub-arrays, the profile of the spatial amplitude modulation produced on said reception antenna array corresponding to each signal transmitted by a transmission sub-array is captured, an estimation $\hat{f}$ of the time-dependent amplitude modulation frequency is calculated for each transmitted signal by means of a spatio-temporal correlation function taking account of the time-dependent amplitude modulation frequency and the frequency of said at least one spatial amplitude modulation, the frequency $f_k$ corresponding to the correlation maximum of said spatio-temporal correlation being the estimated frequency $\hat{f}$ of the time-dependent amplitude modulation generated by said transmitted signal, a measurement of said target height ($h_2$) being calculated on the basis of at least one estimated frequency corresponding to a signal transmitted from said transmission sub-arrays.

11. Method according to Claim 10, **characterized in that** the measurement of said target height ($h_2$) is a combination of the height measurements corresponding to each transmitted signal.

12. Method according to Claim 11, **characterized in that** said combination is an average.

13. Method according to any one of the preceding claims, **characterized in that** said target is a bridge deck.

14. Method according to any one of Claims 1 to 12, **characterized in that** said target height ($h_2$) corresponds to the apparent height of the average bright spot of a continuous object located on the ground.

15. Radar, **characterized in that** it is able to implement the method according to any one of the preceding claims.

16. Radar according to Claim 15, **characterized in that** it is able to be fitted on a motor vehicle.

**FIG.1**

FIG.2

FIG.4

EP 3 279 690 B1

FIG.5

FIG.6

FIG.7

EP 3 279 690 B1

FIG.8

EP 3 279 690 B1

FIG.9

Legend:
- modulation pour $h_1$ = 40cm
- modulation pour $h_1$ = 43cm
- modulation pour $h_1$ = 46cm
- modulation pour $h_1$ = 49cm
- modulation pour $h_1$ = 52cm

Temps en sec.

EP 3 279 690 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102010007415 A1
- US 6377205 B1
- US 2008111733 A1
- FR 2913774
- FR 2901613